# EUROPÄISCHE PATENTANMELDUNG

(11) **EP 1 767 416 A2**
(43) Veröffentlichungstag der Anmeldung: **28.03.2007**
(21) Anmeldenummer: 06019077.4
(22) Anmeldetag: 12.09.2006
(51) Int. Cl.: B60S 1/38

(54) **Gummielastische Wischleiste für das Wischerblatt eines Scheibenwischers**

(30) Priorität: 23.09.2005 DE 102005045411
(71) Anmelder: Volkswagen Aktiengesellschaft, 38436 Wolfsburg (DE)
(72) Erfinder: Fangmeier, Wilhelm, 38442 Wolfsburg (DE)

(57) **Zusammenfassung**

Die Erfindung betrifft eine gummielastische Wischleiste (4) für das Wischerblatt eines Scheibenwischers, die ein Oberteil (5,10,15) zur Verbindung mit einem dauerelastischen Tragelement (2) und eine mit dem Oberteil (5) verbundene Wischlippe (6,11) zur Anlage an einer Fahrzeugscheibe (3) aufweist. Sie löst die Aufgabe, eine derartige Wischleiste so zu gestalten, dass Umlegegeräusche beim Umlegen der Wischlippe am jeweiligen Bewegungs-Umkehrpunkt des Scheibenwischers vermieden, zumindest jedoch minimiert sind. Dazu sind in dem Übergangsbereich zwischen dem Oberteil (5,10,15) und der im Querschnitt wesentlich schmaleren Wischlippe (6,11) entlang deren Längserstreckung Dämpfungsstränge (7,8,9,12,13,16) aus einem Material eingeformt, das eine wesentlich geringere Shore A - Härte als das Material der Wischleiste (4) aufweist, und die Dämpfungsstränge (7,8,9,12,13,16) sind mit dem gummielastischen Material der Wischleiste (4) stoffschlüssig verbunden.

## Beschreibung

Die Erfindung betrifft eine gummielastische Wischleiste für das Wischerblatt eines Scheibenwischers an einem Fahrzeug, insbesondere für ein haltebügelloses Wischerblatt.

Haltebügellose Wischerblätter bestehen im wesentlichen aus einer aus einem gummielastischen Material gefertigten langgestreckten Wischleiste, die üblicherweise ein mit seitlichen Längsnuten versehenes Oberteil und ein mit diesem über zumindest einen Kippsteg verbundenes Unterteil mit einer Wischlippe aufweist, und einem mit dieser verbundenen und gegenüber der Scheibe konkav gekrümmten, federelastischen Trägerelement. Dieses ist insbesondere aus zwei parallelen Federschienen gebildet, die in den im Oberteil ausgebildeten Längsnuten angeordnet sind. Das Trägerelement und die Wischleiste sind über an deren Enden befestigte Abschlusskappen miteinander verbunden und weisen in der Mitte eine Anschtussvorrichtung zu Anordnung an einem Wischerarm eines Scheibenwischers auf. Derartige Wischerblätter sind sog. Flachbau-Wischerblätter mit ästhetischen und fertigungstechnischen Vorteilen: Insbesondere sind diese Wischerblätter weniger aufwändig als herkömmliche Wischerblätter mit einem Haltebügelsystem zur Übertragung der vom Wischerarm ausgeübten Anpresskraft auf die Wischlippe.

Beim Betreiben des Scheibenwischers wird die Wischlippe um den zumindest einen Kippsteg nach der jeweiligen Rückseite des über die Fahrzeugscheibe hin- und herstreichenden Wischerblattes gekippt und am Bewegungs-Umkehrpunkt des Scheibenwischers nach der jeweils anderen, nun die Rückseite bildenden Seite umgelegt. Dieses Umlegen oder auch Umschnappen der Wischlippe ist mit einer störenden Geräuschentwicklung verbunden, die insbesondere durch ein Aufschlagen der jeweiligen Längskante des Unterteils auf die über dieser ausgebildeten Fläche im Bereich des Kippsteges hervorgerufen wird und einen hohen Geräuschpegel im Fahrzeug erzeugt.

Aus der DE 100 61 328 C2 ist ein Wischerblatt mit einem Haltebügelsystem für einen Scheibenwischer bekannt, das aus einer einstückigen, gummielastischen Wischleiste mit einem Oberteil und einem mit diesem über einen Kippsteg verbundenen Unterteil mit einer an letzterem ausgebildeten Wischlippe und einem die Wischleiste halternden, krallenförmige Haltebügel aufweisenden Trägergestell gebildet ist. Zwischen dem Oberteil und dem Unterteil ist beidseits des Kippsteges ein Spalt ausgebildet, an dem die Oberkante des Unterteils parallel zur Unterkante des Oberteils verläuft. In diesem Spalt sind mehrere, über die Wischleiste verteilte Abstandshalter angeformt oder angeordnet, die den Spalt an der Ausbildungs- oder Anordnungsstelle ausfüllen, wobei jeweils zwei gegenüberliegende Abstandshalter als Schenkel einer elastischen Klammer ausgebildet sind, die zwischen jeweils zwei Haltebügeln des Trägergestells das Oberteil der Wischleiste umgreift.

Die Abstandshalter fördern ein Umlegen der Wischlippe am jeweiligen Bäweoungs-Umkehrpunkt des Scheibenwischers, so dass diese nicht in der vorher gegebenen (Nachschlepp-)Stellung verbleibt und in der umgekehrten Bewegungsrichtung in dieser Stellung an der Fahrzeugsscheibe entlangschabt und Rattergeräusche verursacht. Allerdings verhindern die Abstandshalter auch, dass das Unterteil nach der Seite zu kippt. Das bedeutet schließlich, dass sich statt des gesamten Unterteils nur die an diesem ausgebildete Wischlippe umlegt und nur diese deformiert und abgewinkelt wird. Dadurch wird die Wischlippe stärker belastet und unterliegt folglich auch einem größeren Verschleiß, da die Wischleiste versteift ist und die vom Wischerarm aufgebrachte Anpresskraft weniger gedämpft auf die an der Fahrzeugscheibe anliegende Wischlippe übertragen wird.

Es ist Aufgabe der Erfindung, eine gummielastische Wischleiste für das Wischerblatt eines Scheibenwischers nach dem Oberbegriff des Anspruchs 1 so zu gestalten, dass Umtegegeräusche beim Umlegen der Wischlippe am jeweiligen Bewegungs-Umkehrpunkt des Scheibenwischers Umlegegeräusche vermieden, zumindest jedoch minimiert sind.

Diese Aufgabe wird bei einer gummielastischen Wischleiste nach dem Oberbegriff des Anspruchs 1 durch dessen kennzeichnenden Merkmale gelöst. Vorteilhafte Ausgestaltungen sind in den Unteransprüchen aufgeführt.

Die Erfindung besteht darin, dass bei einer gummielastischen Wischleiste, die ein Oberteil zur Verbindung mit einem dauerelastischen Tragelement, insbesondere mit einer federelastischen Trägerschiene, und eine mit dem Oberteil verbundene Wischlippe zur Anlage an einer Fahrzeugscheibe aufweist, in dem Übergangsbereich zwischen dem Oberteil und der Wischlippe entlang deren Längserstreckung Dämpfungsstränge eingeformt sind. Diese Dämpfungsstränge bestehen aus einem Material, das eine wesentlich geringere Shore A - Härte als das Material der Wischleiste aufweist, vorzugsweise eine um im Wesentlichen 50% reduzierte Shore A - Härte, und sind mit dem gummielastischen Material der Wischleiste stoffschlüssig verbunden. Das Wischerblatt ist durch diese Ausbildung im Übergangsbereich zwischen dem Oberteil und der Wischlippe frei von Längskanten. Das Material der Dämpfungsstränge ist leichter elastisch deformierbar als das der Wischleiste. Daher ermöglichen die Dämpfungsstränge, dass die durch den Wischerarm über das Wischerblatt an die jeweilige Fahrzeugscheibe angedrückte WiSchlippe im Übergangsbereich gegenüber der Symmetrieachse der Wischleiste elastisch neigbar ist. Bei einem Betrieb des Scheibenwischers wird diese elastische Grundneigung durch eine Neigung bzw. ein Abbiegen der fahrzeugscheibenseitig stark verjüngten Wischlippe selbst verstärkt, so dass diese an der Fahrzeugscheibe eine Gesamtneigung von im Wesentlichen 45° hat. Damit kann das Wischerblatt die vom Wischerarm auf dieses aufgebrachte Anpresskraft aufnehmen und auf die Wischlippe übertragen. Bei einer Umkehr der Bewegungsrichtung des Scheibenwischers kippt die Wischlippe nach der anderen Seite der Symmetrieachse der Wischleiste um, so dass der bis dahin im Querschnitt gedehnte Dämpfungsstrang nun komprimiert und der bis dahin komprimierte Dämpfungsstrang gedehnt wird. Da im Übergangsbereich keine Längskanten vorhanden sind, die bei einem Wechsel der Bewegungsrichtung gegen die Unterfläche des Oberteils schlagen und Umlegegeräusche erzeugen können, wie sie bei einer herkömmlichen Wischleiste durch ein die Wischlippe tragendes Unterteil verursacht werden, treten letztere nicht auf.

Vorteilhaft sind die Dämpfungsstränge in im Übergangsbereich im Oberteil beidseits der Wischlippe ausgebildeten längserstreckten Längsnuten oder Ausnehmungen angeordnet. Dabei füllen die Dämpfungsstränge die Längsnuten nur mit einem Teil ihrer Querschnittsfläche aus. Der übrige Teil, im Wesentlichen ebenso groß, ragt jeweils aus der Längsnut heraus und ist wischlippenseitig mit der Wischlippe stoffschlüssig verbunden. Die freiliegende Außenfläche des jeweiligen Dämpfungssteges kann dabei beliebig, beispielsweise ebenflächig oder gekrümmt, gestaltet sein.

Im Übergangsbereich kann in der Wischlippe auch ein schmaler Kippsteg ausgebildet sein, der vollständig im Bereich des jeweiligen Dämpfungsstranges angeordnet ist. Alternativ dazu kann die Wischlippe auch völlig vom Oberteil getrennt und nur über das Material der Dämpfungsstränge mit dem Oberteil verbunden sein, wobei die Wischlippe oberteilseitig von diesem Material umschlossen ist, derart, dass zugleich Dämpfungsstränge ausgebildet sind.

Wischleisten mit derartigen Dämpfungssträngen können auf einfache Weise durch Extrudieren hergestellt werden, wobei die Dämpfungsstränge mit anextrudiert werden.

Die Erfindung wird nachfolgend anhand von Ausführungsbeispielen erläutert. In den zugehörigen Zeichnungen zeigen:
- Fig. 1:: ein haltebügelloses Wischerblatt mit einer Wischleiste,
- Fig, 2a:: einen Schnitt II - II durch dieses,
- Fig. 2b:: das Wischerblatt während des Betriebes im Schnitt II - II,
- Fig. 3a und b:: eine modifizierte Wischleiste im Schnitt, davon b) in einer Betriebsposition,
- Fig. 4:: eine weitere modifizierte Wischleiste im Schnitt und
- Fig. 5 bis 7:: alternative Wischleisten im Schnitt.

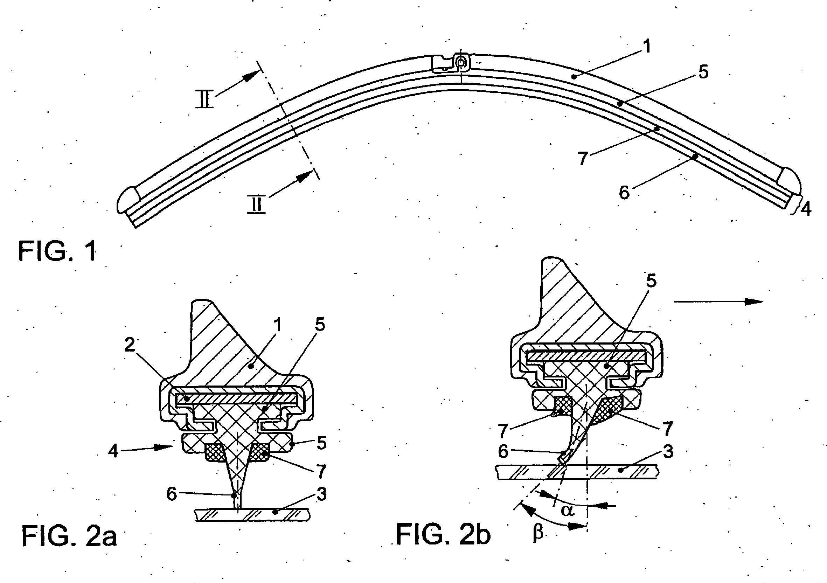

Das in den Fig. 1 und 2a und b gezeigte Wischerblatt für einen Scheibenwischer eines Fahrzeugs weist ein von einem Windleitprofil 1 umschlossenes federelastisches Tragelement 2 (Fig. 2) und eine mit diesem verbundene und an eine Fahrzeugscheibe 3 (Fig. 2) anlegbare langgestreckte gummielastische Wischleiste 4 auf, die aus einem mit dem Windleitprofil 1 versehenen Oberteil 5 zur Verbindung mit dem Tragelement 2 und einer mit dem Oberteil 5 verbundenen Wischlippe 6 besteht. Im Übergangsbereich zwischen dem Oberteil 5 und der im Querschnitt (Fig. 2) wesentlich schmaleren Wischlippe 6 sind entlang deren Längserstreckung zwei Längsnuten ausgebildet, in denen jeweils ein im Querschnitt trapezförmiger Dämpfungsstrang 7 eingeformt und stoffschlüssig durch Extrusion mit dem Material (EPDM) der Wischleiste verbunden ist. Dabei füllen die Dämpfungsstränge 7 die Längsnuten mit einem Teil ihrer Querschnittsfläche aus und ragen mit dem übrigen Tell.der Querschnittsfläche aus der jeweiligen Längsnut'heraus, wobei der vorstehende Teil wischlippehsehig mit der Wischlippe 6 stoffschlüssig verbunden ist. Die Dämpfungsstränge 7 bestehen aus einem Material, das eine um etwa 50% niedrigere Shore A - Härte hat als das Material der Wischleiste 4.

Im Wischbetrieb werden das Oberteil 5 im Bereich der Längsnuten und die Wischlippe 6 durch den Anpressdruck des nicht dargestellten Wischerarmes und die Gleitbewegung der Wischlippe 6 an der Fahrzeugscheibe 3 deformiert, wobei die Wischlippe 6 am Oberteil 5 eine Grundneigung α nach der der Bewegungsrichtung (Pfeil) abgewandten Seite erfährt, die durch eine zusätzliche Neigung des fahrzeugseitig stark verjüngten Endbereiches der Wischlippe 6 verstärkt wird. Der Summenwinkel β beträgt im Wesentlichen 45°. Dabei ersetzen die Dämpfungsstege 7 das sonst übliche Unterteil mit einem Kippsteg und in dessen Bereich ausgebildeten Kanten, die beim Umlegen der Wischlippe 6 bei einer Umkehr der Bewegungsrichtung des Scheibenwischers Umlegegeräusche verursachen, stabilisieren die Wischlippe 6 in der jeweiligen (Neigungs-) Position, in dem diese ein Kräftegleichgewicht mit den Kräften herstellen, die bei einer Gleitbewegung der an die Fahrzeugscheibe angedrückten Wischlippe 6 auf diese wirken. Da anschlagende Kanten nicht vorhanden sind, können auch keine durch diese verursachte Umlegegeräusche nicht auftreten.

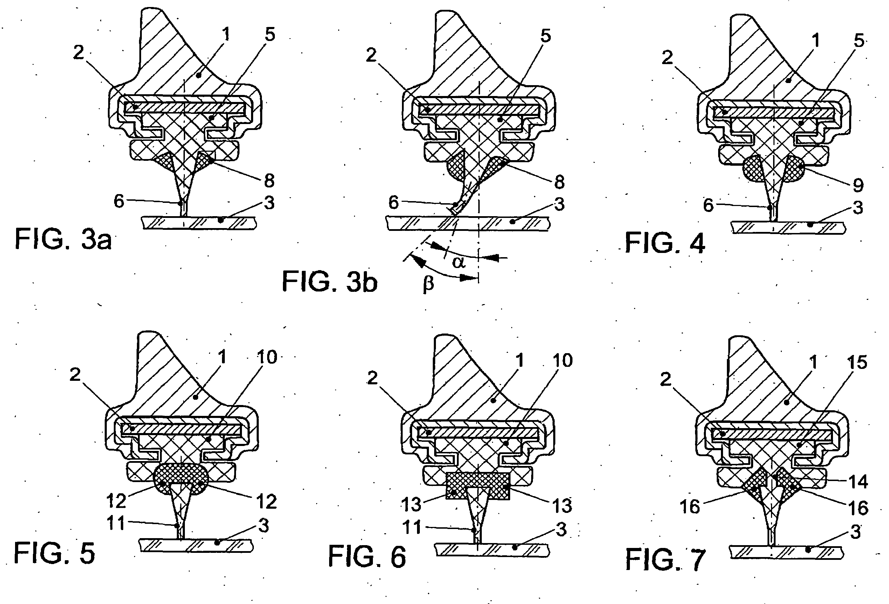

Die Fig. 3a und b zeigen eine favorisierte modifizierte Ausführungsform. Bei dieser sind die Dämpfungsstränge 8 im Querschnitt dreieckförmig ausgebildet und in entsprechend kerbenartigen Ausnehmungen im Oberteil eingeformt. Auch bei dieser Ausführung ragt etwa die halbe Querschnittsfläche des jeweiligen Dämpfungssteges 8 über die Ausnehmung hinaus und ist mit der Wischlippe 6 stoffschlüssig verbunden.

Eine weitere im Querschnitt modifizierte Ausführung von Dämpfungsstegen zeigt Fig. 4. Die dort gezeigten Dämpfungsstege 9 sind im Querschnitt im Wesentlichen halbkreisförmig ausgebildet und jeweils in einer entsprechend gestalteten längserstreckten Ausnehmung eingeformt.

Alternative Ausführungen sind in den Fig. 5, 6 und 7 dargestellt. Bei den Ausführungen nach Fig. 5 und 6 ist der Übergangsbereich zwischen dem Oberteil 10 und der Wischlippe 11 durch das Material der Dämpfungsstränge 12 bzw. 13 gebildet, das mit dem Material des Oberteils 10 stoffschlüssig verbunden ist. Die Wischlippe 11 ist jeweils oberteilseitig in dieses Material eingebettet und ebenfalls stoffschlüssig mit diesem verbunden. Die Dämpfungsstränge 12 und 13 und die im Oberteil 10 ausgebildeten Längsnuten bzw. Ausnehmungen unterscheiden sich lediglich durch ihre Querschnittsform. Schließlich zeigt Fig. 7 eine Ausführung, bei der in dem Übergangsbereich ein schmaler Kippsteg 14 aus dem Material der Wischleiste 4 ausgebildet ist. Die Längsnuten sind im Bereich zwischen dem Kippsteg 14 und dem Oberteil 15 ausgebildet, und die Dämpfungsstränge 16 weisen die Querschnittsform zweier zusammengesetzter Dreiecke auf. Es versteht sich von selbst, dass die Gestaltung des Kippsteges 14 und die der Dämpfungsstränge 16 variieren können.

### Bezugszeichenliste

- 1: Windleitprofil
- 2: Tragelement
- 3: Fahrzeugscheibe
- 4: Wischleiste
- 5: Oberteil
- 6: Wischlippe
- 7: Dämpfungsstrang
- 8: Dämpfungsstrang
- 9: Dämpfungsstrang
- 10: Oberteil
- 11: Wischlippe
- 12: Dämpfungsstrang
- 13: Dämpfungsstrang
- 14: Kippsteg
- 15: Oberteil
- 16: Dämpfungsstrang
- α: Grundneigung
- β: Summenwinkel

## Patentansprüche

1. Gummielastische Wischleiste für das Wischerblatt eines Scheibenwischers, mit einem Oberteil zur Verbindung mit einem dauerelastischen Tragelement und mit einer mit dem Oberteil verbundenen Wischlippe zur Anlage an einer Fahrzeugscheibe, **dadurch gekennzeichnet, dass** in dem Übergangsbereich zwischen dem Oberteil (5,10,15) und der Wischlippe (6, 11) entlang deren Längserstreckung Dänipfüngsstränge (7, 8, 9, 12, 13, 16) aus einem Material eingeformt sind, das eine wesentlich geringere Shore A - Härte als das Material der Wischleiste (4) aufweist, und das die Dämpfungsstränge (7, 8, 9, 12, 13, 16) mit dem gummielastischen Material der Wischleiste (4) stoffschlüssig verbunden sind.

2. Wischleiste nach Anspruch 1, **dadurch gekennzeichnet, dass** im Übergangsbereich beidseits der Wischlippe (6) Längsnuten oder längserstreckte Ausnehmungen im Oberteil (5) ausgebildet sind, und dass die Dämpfungsstränge (7, 8, 9) diese mit einem Teil ihrer Querschnittsfläche ausfüllen und mit dem übrigen Teil ihrer Querschnittsfläche aus der jeweiligen Längsnut herausragen und wischlippenseitig mit der Wischlippe (6) stoffschlüssig verbunden sind.

3. Wischleiste nach Anspruch 2, **dadurch gekennzeichnet, dass** in dem Übergangsbereich ein Kippsteg (14) aus dem Material der Wischleiste (4) ausgebildet ist, und dass die Längsnuten oder Ausnehmungen zur Einformung der Dämpfungsstege (16) im Bereich zwischen dem Kippsteg (14) und dem Oberteil (15) ausgebildet sind.

4. Wischleiste nach Anspruch 1, **dadurch gekennzeichnet, dass** der Übergangsbereich durch das Material der Dämpfungsstränge (12, 13) gebildet und die Wischlippe (11) über dieses Material mit dem Oberteil (10) stoffschlüssig verbunden ist, wobei die Wischlippe (11) o-berteilseltig von diesem Material umschlossen ist, derart, dass zugleich die Dämpfungsstränge (12, 13) ausgebildet sind.

5. Wischleiste nach einem der vorhergehenden Ansprüche, **dadurch gekennzeichnet, dass** das Material der Wischleiste (4) eine Härte von 50 bis 60 Shore A und das Material der Dämpfungsstränge (7, 8, 9, 12, 13, 16) im Wesentlichen 50 % von dieser hat.

6. Wischleiste nach einem der vorhergehenden Ansprüche, **dadurch gekennzeichnet, dass** die Wischleiste (4) durch Extrusion hergestellt ist.
